(19) Europäisches Patentamt / European Patent Office / Office européen des brevets

(11) **EP 2 446 228 B1**

## (12) FASCICULE DE BREVET EUROPEEN

(45) Date de publication et mention
de la délivrance du brevet:
**05.06.2013 Bulletin 2013/23**

(21) Numéro de dépôt: **10734277.6**

(22) Date de dépôt: **18.06.2010**

(51) Int Cl.:
**G01D 5/22** *(2006.01)*    **G01D 5/20** *(2006.01)*

(86) Numéro de dépôt international:
**PCT/FR2010/051237**

(87) Numéro de publication internationale:
**WO 2010/149910 (29.12.2010 Gazette 2010/52)**

## (54) CAPTEUR DE POSITION ANGULAIRE

WINKELPOSITIONSSENSOR

ANGULAR POSITION SENSOR

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **23.06.2009 FR 0954273**

(43) Date de publication de la demande:
**02.05.2012 Bulletin 2012/18**

(73) Titulaire: **Electricfil Automotive
01708 Miribel Cedex (FR)**

(72) Inventeur: **MÖLLER, Rainer
F-69970 Chaponnay (FR)**

(74) Mandataire: **Thibault, Jean-Marc et al
Cabinet Beau de Loménie
51, Avenue Jean Jaurès
B.P. 7073
69301 Lyon Cédex 07 (FR)**

(56) Documents cités:
**EP-A1- 0 527 673     DE-A1- 3 919 749
DE-A1- 10 121 870     DE-A1- 19 738 836**

**Description**

La présente invention concerne le domaine des capteurs de position.

Plus particulièrement, la présente invention concerne le domaine des capteurs de position angulaire à bobines magnétiques.

De tels capteurs sont notamment utiles pour déterminer la position angulaire de pièces tournantes sur un arbre ou d'un arbre lui-même par exemple dans des véhicules, des moteurs ou des machines-outils.

Dans le domaine technique de l'invention, on connaît déjà des capteurs de position angulaire dotés d'une bobine planaire d'excitation et de plusieurs bobines secondaires situées à l'intérieur de la bobine planaire d'excitation. Dans ces capteurs, la bobine d'excitation génère, lorsqu'elle est alimentée en courant électrique, un champ magnétique dans les bobines secondaires. Ce champ magnétique est ensuite modulé par la présence d'une cible, solidaire de l'objet tournant dont on veut déterminer la position, qui se déplace en regard des bobines dans un plan parallèle à celles-ci de façon à créer un couplage entre bobine primaire et bobines secondaires qui varient avec la position de la cible. Le document DE 19 738 836 A1 décrit un tel capteur.

Cependant, le capteur décrit dans DE 19 738 836 A1 ne permet pas de déterminer avec précision une position angulaire sur 360° d'angle, car les signaux électriques aux bornes des bobines secondaires se répètent plusieurs fois sur un tour. On ne peut donc déterminer avec précision à partir de ces signaux la position exacte de la cible et donc de la pièce tournante observée.

De plus, la bobine d'excitation émet des champs électromagnétiques qui risquent de perturber le cas échéant d'autres équipements électroniques et peut dans le même temps elle-même capter d'autres champs électromagnétiques susceptibles de perturber le fonctionnement du capteur.

Vu les inconvénients des capteurs connus, le but de la présente invention est de proposer un capteur de position angulaire simple et compact qui permette de déterminer la position absolue d'un objet tournant de façon univoque et fiable, sur un secteur angulaire de 360°.

Un autre but de la présente invention est de procurer un capteur de position angulaire qui présente une susceptibilité électromagnétique réduite et un faible niveau d'émission électromagnétique.

L'invention atteint ses buts en proposant un capteur de position angulaire adapté pour déterminer la position instantanée en rotation d'un objet tournant, du type comportant au moins une première piste électrique, au moins une seconde piste électrique et au moins une cible magnétique mobile en regard de la première piste électrique et de la seconde piste électrique et solidaire de l'objet tournant.

Selon l'invention, ce capteur est caractérisé en ce que :

- la première piste électrique comporte au moins un premier bobinage formé de spires sensiblement circulaires centrées par rapport à l'axe de rotation de l'objet tournant et de la cible,
- la seconde piste électrique comporte :

    o au moins un second bobinage formé de spires sensiblement circulaires et dont le centre est décalé d'une distance d1 par rapport au centre des spires du premier bobinage de la première piste électrique, et
    o au moins un troisième bobinage formé de spires sensiblement circulaires et dont le centre est décalé d'une distance d1 par rapport au centre du premier bobinage de la première piste électrique le long d'un axe perpendiculaire à l'axe de rotation de l'objet tournant et de la cible et à un axe passant par le centre du premier bobinage de la première piste électrique et du second bobinage de la seconde piste électrique.

Conformément à une caractéristique préférée du capteur de l'invention, le premier bobinage de la première piste électrique est composé de deux demi-bobinages concentriques de diamètres différents et dont le sens de bobinage est inversé.

De façon analogue mais également préférée, le second bobinage de la seconde piste électrique est composé de deux demi-bobinages de diamètres sensiblement identiques, dont le sens de bobinage est inversé, et décalés chacun d'une distance d1 dans deux sens opposés par rapport au centre des spires du premier bobinage de la première piste électrique.

Toujours selon l'invention, dans un mode de réalisation particulier du capteur présenté, le troisième bobinage de la seconde piste électrique est composé de deux demi-bobinages de diamètres sensiblement identiques, dont le sens de bobinage est inversé, et décalés chacun d'une distance d1 dans deux sens opposés par rapport au centre du premier bobinage de la première piste électrique le long d'un axe perpendiculaire à l'axe de rotation de l'objet tournant et de la cible et à un axe passant par le centre du premier bobinage de la première piste électrique et du second bobinage de la seconde piste électrique.

Selon une caractéristique originale du capteur de l'invention, le second et le troisième bobinages de la seconde piste électrique sont formés entre les deux demi-bobinages du premier bobinage de la première piste électrique.

Conformément à l'invention, la cible du capteur est solidaire de l'objet tournant de telle sorte qu'elle se déplace en rotation dans un plan parallèle au plan dans lequel sont tous trois formés les premier, second et troisième bobinages de la première piste électrique et de la seconde piste électrique.

De façon avantageuse et préférée, la cible du capteur couvre la surface comprise entre les deux demi-bobinages du premier bobinage de la première piste électrique sur un secteur angulaire de 180°.

Toujours selon une caractéristique préférée de l'invention, la cible comporte un matériau électriquement conducteur, ou, en variante, un matériau ferromagnétique ou un circuit électrique résonnant LC.

Dans un mode de réalisation particulier du capteur de l'invention, les spires formant les deuxième et troisième bobinages de la seconde piste électrique ne sont pas parfaitement circulaires, leur rayon étant localement réduit par rapport au rayon d'un cercle parfait dans une zone située au plus proche du centre du premier bobinage de la première piste électrique.

Enfin, de façon avantageuse afin de respecter les normes CEM notamment et améliorer les performances électromagnétiques du capteur, les deux demi-bobinages de la première piste électrique sont dimensionnés de manière à ce que la tension induite aux bornes de la piste par un champ magnétique homogène est nulle.

La présente invention a par ailleurs pour objet un procédé de détermination de la position angulaire d'un objet tournant à l'aide d'un capteur de position angulaire tel que défini précédemment.

Selon l'invention, ce procédé se caractérise par le fait que :

- on positionne la cible du capteur sur l'objet tournant de telle sorte qu'elle se déplace lors de mouvements de l'objet en face des bobinages des première et seconde pistes électriques du capteur dans un plan parallèle à celui contenant les dits bobinages,
- on alimente une tension alternative U1 aux bornes du premier bobinage de la première piste électrique pour générer un champ magnétique B,
- on mesure la tension alternative induite U2, U3 aux bornes des second et troisième bobinages de la seconde piste électrique du capteur, lesdites tensions U2, U3 étant variables en fonction de la position angulaire de la cible, et
- on calcule la position angulaire $\phi$ de l'objet tournant portant la cible suivant la relation : $\phi$= atan (U3/U2)

Avec

$$U2 = A \sin(\omega t) \cos(\Phi)$$

$$U3 = A \sin(\omega t) \sin(\Phi)$$

Où A= amplitude maximale des tensions U2, U3
$\omega$= fréquence du signal d'excitation U1
t= temps en seconde.

Dans une variante de mise en oeuvre du procédé de l'invention, on corrige les éventuelles erreurs sur le calcul de la position angulaire $\phi$ par addition ou soustraction de signaux harmoniques sur la valeur de $\phi$.

Diverses autres caractéristiques ressortent de la description faite ci-dessous en référence aux dessins annexés qui montrent, à titre d'exemples non limitatifs, des formes de réalisation de l'objet de l'invention.

Sur les figures :

- la **Figure 1** représente schématiquement en plan les bobinages formant les deux pistes électriques du capteur de l'invention;
- la **Figure 2** est une vue analogue à celle de la **Figure 1** sur laquelle est également représentée la cible du capteur, parallèle et recouvrant partiellement les bobinages des deux pistes électriques du capteur ;
- la **Figure 3** représente schématiquement une variante de réalisation de la deuxième piste électrique du capteur pour améliorer la linéarité de la réponse du capteur ;
- la **Figure 4** représente une comparaison des signaux de sortie aux bornes des bobinages de la seconde piste électrique avec des signaux sinus et cosinus parfaits ;
- la **Figure 5A** représente schématiquement les lignes de flux du champ magnétique B dans un capteur selon l'invention muni d'un seul bobinage de réalisation de la première piste électrique;
- la Figure **5B** représente schématiquement les lignes de flux du champ magnétique dans un capteur selon l'invention muni de deux bobinages en sens inverse de réalisation de la première piste électrique.

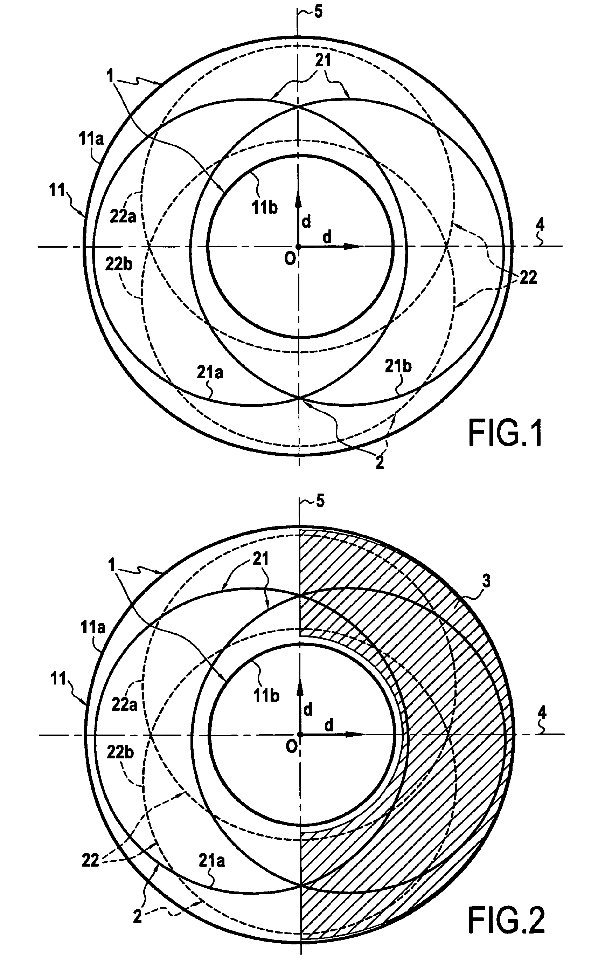

La présente invention propose un capteur de position angulaire adapté pour déterminer la position instantanée en rotation d'un objet tournant. Comme représenté sur les **Figures 1** et **2,** le capteur de l'invention comporte au moins une première piste électrique **1** et au moins une seconde piste électrique **2** toutes deux établies dans un même plan sur le capteur. En regard, c'est-à-dire dans un plan parallèle à celui contenant la première et la seconde pistes électriques **1, 2** est disposée une cible magnétique mobile **3**. Cette cible **3** est traditionnellement montée solidaire d'un objet tournant, non représenté sur la **Figure 2,** dont on souhaite mesurer la position angulaire instantanée. Un tel objet tournant peut notamment être un arbre tournant d'un moteur électrique, un papillon d'admission dans un moteur à combustion interne, un volant de véhicule etc...

Le capteur représenté sur les **Figures 1** et **2** possède une première piste électrique **1** composée d'un premier bobinage **11** formé de deux demi-bobinages concentriques **11a, 11b** circulaires centrés par rapport à un centre O par lequel passe l'axe de rotation de la cible **3**. Les deux demi-bobinages **11a, 11b** sont réalisés tous deux de façon concentrique avec des sens de bobinage inversés entre eux et des diamètres sensiblement différents, le demi-bobinage "interne" **11b** étant de diamètre singulièrement plus réduit que celui du demi-bobinage "externe" **11a.**

Le capteur possède également une seconde piste électrique de structure plus complexe. En effet, cette seconde piste électrique est en fait constitutée d'un second bobinage **21** et d'un troisième bobinage **22,** chacun composé de deux demi-bobinages **21a, 21b** et **22a, 22b** sensiblement circulaires et ayant leur centre décalé d'une distance **d** par rapport au centre O des deux bobinages **11a, 11b** de la première piste électrique **1.**

Ainsi, les deux demi-bobinages **21a, 21b** sont décalés par rapport au centre O d'une distance d le long d'un axe **4** horizontal et perpendiculaire à l'axe de rotation de la cible et les deux demi-bobinages **22a, 22b** sont décalés d'une distance **d** le long d'un axe **5** vertical et perpendiculaire à l'axe **4** et à l'axe de rotation de la cible **3** passant par O.

De plus, comme les deux demi-bobinages **11a, 11b** de la première piste **1,** les sens de bobinage des demi-bobinages **21a, 21b** ainsi que des demi-bobinages **22a, 22b** sont inversés entre eux et sont décalés par rapport au centre O dans des sens opposés.

Le second bobinage **21** et le troisième bobinage **22** de la seconde piste électrique **2** sont par ailleurs formés de façon préférée entre les deux demi-bobinages **11a, 11b** du premier bobinage **11** de la première piste électrique **1.**

En variante, il est possible de réaliser un capteur comportant n bobinages en sus du premier bobinage **11** de la première piste **1** avec des spires sensiblement circulaires et ayant leur centre décalé d'une distance **d** par rapport au centre du premier bobinage **11** le long de plusieurs axes perpendiculaire à l'axe de rotation de la cible avec un écartement de 360°/n entre ces axes. Cependant, une telle multiplication des bobinages renchérit considérablement le coût du capteur sans pour autant améliorer sa précision et son fonctionnement de manière significative.

La cible **3** est fixée sur l'objet tournant dont on souhaite déterminer la position angulaire et se déplace au dessus des bobinages **11, 21, 22** des première et seconde pistes **1, 2** dans un plan parallèle à celles-ci. Cette cible **3** a avantageusement des propriétés permettant de modifier le champ électromagnétique à sa proximité, et notamment au niveau desdits bobinages **11, 21, 22** dont elle recouvre une partie comme représenté sur la Figure **2.** De préférence, la cible couvre la surface entre le demi-bobinage "externe" **11a** et le demi-bobinage "interne" **11b** du premier bobinage **11** sur une zone angulaire de 180°.

La cible **3** peut être constituée par exemple d'un matériau électriquement conducteur tel que de l'aluminium, ou encore de façon préférée un circuit imprimé de cuivre sur un support epoxy. Elle peut également être formée d'un matériau ferromagnétique, ou encore, en variante, d'un circuit électrique résonant de type LC.

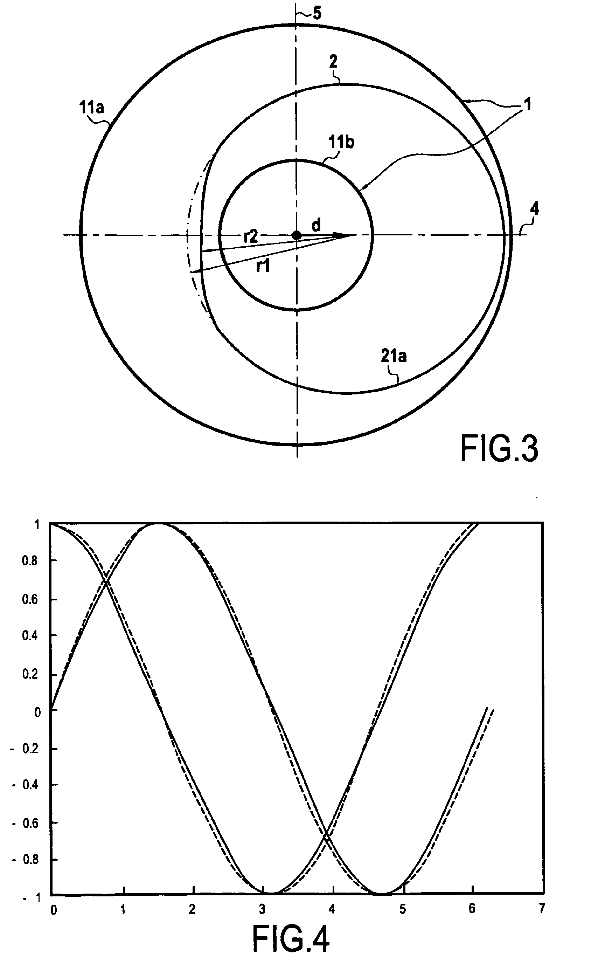

Dans une variante de réalisation du capteur de l'invention représentée à la Figure **3,** la forme des spires du deuxième et du troisième bobinages **21, 22** peut ne pas être parfaitement circulaire, mais tendre vers un ovoïde. Dans ce cas, le rayon réel **r2** de chaque demi-bobinage **21a, 21b** du deuxième bobinage **21** (et respectivement des demi-bobinages **22a, 22b** du troisième bobinage **22** non représenté) est localement réduit par rapport au rayon du cercle parfait **ri** dans la zone qui se rapproche le plus du centre O du premier bobinage **1.** Cette configuration de demi-bobinages permet d'améliorer la linéarité de la réponse du capteur, en particulier dans les cas où la distance de décalage **d** par rapport au centre O est importante.

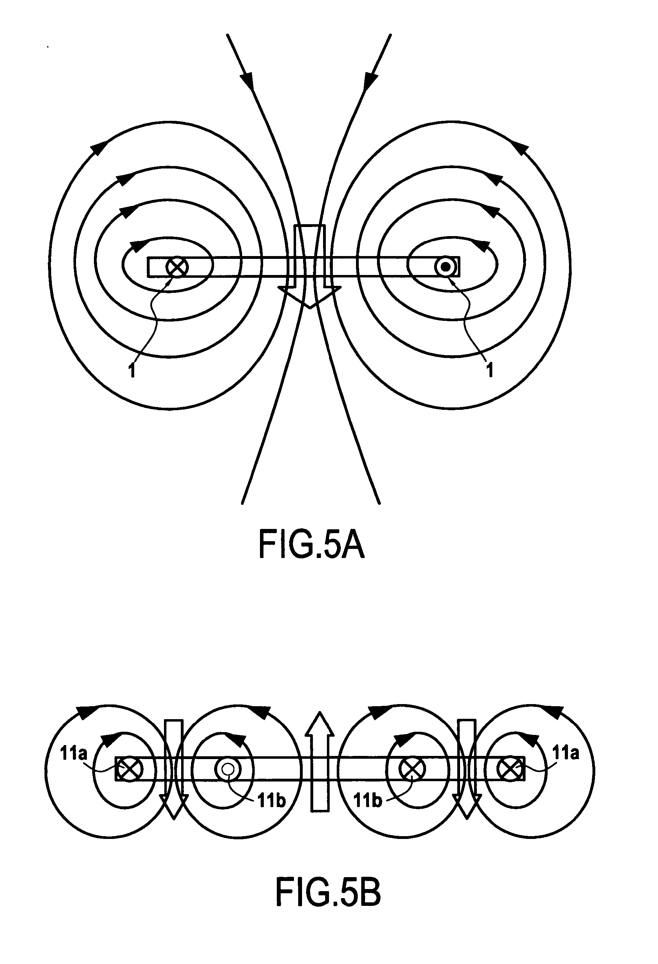

Dans l'exemple de réalisation illustré aux **Figures 1** à **3** et en **Figure 5B,** le premier bobinage **11** est composé de deux demi-bobinages **11a** et **11b** avec des sens de bobinage inversés entre eux et des diamètres sensiblement différents. Ceci présente l'avantage que le champ magnétique généré par la première partie **11a** et la deuxième partie **11b** vont dans le sens opposé, ce qui réduit les émissions électromagnétiques. Aussi les deux demi-bobinages **11a, 11b** peuvent être dimensionnés de manière à ce que la tension induite dans ce bobinage **11** par un champ magnétique homogène soit nulle, ce qui permet d'améliorer la susceptibilité électromagnétique du capteur de l'invention et ainsi de respecter les normes CEM en vigueur.

Une réalisation du capteur selon l'invention est cependant possible en utilisant un premier bobinage **11** avec des spires dans un seul sens comme illustré en **Figure 5A.**

La structure du capteur de l'invention ayant ainsi été présentée, son fonctionnement va maintenant être explicité plus en détail en référence aux **Figures 4** à **5B.**

Une fois le capteur positionné face à la cible **3,** elle-même fixée sur l'objet tournant dont on souhaite obtenir la position, on injecte un courant alternatif dans le premier bobinage **11** de la première piste **1** du capteur en appliquant une tension **U1** à ces bornes. Un champ magnétique alternatif **B** est ainsi généré autour des demi-bobinages **11a, 11b** du premier bobinage **11,** suivant des lignes de champ telles que représentées sur la **Figure 5B.** Ce champ magnétique **B** génère une force motrice dans les spires du deuxième et du troisième bobinages **21, 22.** Les deux demi-bobinages **21a, 21b** du deuxième bobinage **21** sont disposées de manière symétrique par rapport au premier bobinage **11** et leur sens de bobinage sont inversés l'un par rapport à l'autre. La tension induite **U2** aux bornes du second bobinage **21** serait nulle si le champ magnétique **B** n'était pas influencé par la cible **3** face aux bobinages **11, 21.**

Lorsque l'objet tournant portant la cible **3** se déplace, la cible **3** induit une modification du champ magnétique **B.** En particulier, si la cible est constituée d'un matériau conducteur, le passage de la cible **3** dans le champ magnétique **B** va réduire localement la force de celui-ci en raison des courants de Foucault générés dans la cible **3.** Selon la position angulaire de la cible **3,** cette réduction du champ magnétique **B** est plus ou moins importante pour l'un ou l'autre des demi-bobinages **21a, 21b** du deuxième bobinage **21**.

Dans la position de la cible **3** illustrée en **Figure 2** par exemple, le demi-bobinage **21b** est quasi-intégralement couvert par la cible **3**, alors que le demi-bobinage **21a** n'est couvert que sur une très faible portion de sa surface. La tension induite aux bornes du demi-bobinage **21b** est donc plus faible que la tension induite aux bornes du demi-bobinage **21a**. Une tension différentielle **U2** peut donc être mesurée aux bornes du deuxième bobinage **21**.

Dans cette même position angulaire de la cible, les deux demi-bobinages **22a, 22b** du troisième bobinage **22** sont couverts de façon identique, à 50% environ par la cible **3**. La tension **U3** mesurée aux bornes du troisième bobinage **22** est donc nulle pour cette position de la cible.

Si la cible **3** tourne depuis la position représentée **Figure 2**, la tension aux bornes du deuxième bobinage **21** va décroître et la tension aux bornes du troisième bobinage **22** va croître.

Après 90° de rotation, la tension **U3** atteint un maximum et la tension **U2** est nulle.

Après 180° de rotation de la cible **3**, la tension **U3** est de nouveau nulle et la tension **U2** atteint alors un deuxième maximum. En revanche, la phase $\varphi_2$ de la tension **U2** est maintenant inversée par rapport à la phase mesurée dans la position initiale à 0° de rotation.

Lorsque l'angle de rotation de la cible **3** atteint 270°, la tension **U2** est de nouveau nulle et la tension **U3** atteint un maximum avec sa phase $\varphi_3$ inversée par rapport à la phase observée dans la position à 90° de rotation.

En interprétant l'inversion des phases $\varphi_2$, $\varphi_3$ comme une amplitude négative, les amplitudes des tensions différentielles U2 et U3 évoluent de manière sinusoïdale sur un tour de la cible, avec un déphasage de 90° entre l'amplitude de **U2** et l'amplitude de **U3**.

On peut décrire les deux tensions **U2** et **U3** par :

$$\mathbf{U2} = A\,\sin(\omega t)\,\cos(a)$$

$$\mathbf{U3} = A\,\sin(\omega t)\,\sin(a)$$

Avec

A = amplitude maximale des tensions différentielles **U2, U3**
$\omega$ = fréquence du signal d'excitation en rad/s
t = temps (s)
a = position angulaire de la cible en radians.

La position angulaire de la cible peut donc être déterminée par la simple relation suivante :

$$a = \mathrm{atan}(\mathbf{U3}/\mathbf{U2})$$

Le capteur de la présente invention permet donc de déterminer avec précision la position angulaire d'un objet tournant de façon simple et rapide, par mesure des tensions différentielles **U2** et **U3** aux bornes des deuxième et troisième bobinages **21, 22** du capteur, puis application de la fonction trigonométrique arctangente au rapport de ces tensions. La réalisation du capteur de l'invention est particulièrement simple et peu coûteuse, tout comme son exploitation et la précision obtenue sur la détermination de la position de l'objet tournant observé est de l'ordre de 0,2 à 0,5 degrés.

Dans l'exemple de réalisation décrit ci-dessus et représenté sur les Figures, les amplitudes des tensions **U2** et **U3** sont exploitées pour déterminer la position angulaire de la cible **3**. De même, toujours dans l'exemple de réalisation décrit précédemment, un courant d'excitation est injecté dans le premier bobinage **11** de la piste électrique **1**, et les tensions **U2, U3** aux bornes du deuxième et du troisième bobinages **21, 22** sont mesurées. Les amplitudes des tensions mesurées sont l'image du couplage entre les bobinages **11, 21, 22**.

Alternativement, on peut également injecter des signaux d'excitation **U2', U3'** différents dans le deuxième et troisième bobinages **21, 22** et mesurer la tension **U1'** aux bornes du premier bobinage **11**. Cette tension **U1'** aux bornes du premier bobinage **11** sera alors un signal composé des deux signaux d'excitation **U2', U3'**. Les proportions de chacun des signaux d'excitation retrouvée dans le signal **U1'** dépendent alors de la position angulaire de la cible **3**.

De façon complémentaire, il convient de noter que si les demi-bobinages circulaires des pistes électriques **1, 2** du capteur sont particulièrement faciles à réaliser, les signaux obtenus aux bornes de ces bobinages, notamment les signaux secondaires **U2, U3** aux bornes des deux bobinages **21, 22** dans l'exemple présenté ne sont pas parfaitement sinusoïdaux, en particulier si la valeur de décalage d desdits demi-bobinages est importante par rapport au rayon de ces demi-bobinages.

On observe en effet à l'analyse numérique de ces signaux des harmoniques impairs superposés aux signaux **U2** et **U3**, ce qui induit une erreur sur le signal **a** = atan(**U3/U2**) composé des harmoniques de l'ordre **4, 8, 16** etc. Cette erreur peut notamment se remarquer également dans le décalage existant entre les sinusoïdes décrites par les signaux **U2, U3** et des signaux sinus et cosinus parfaits comme représenté sur la **Figure 4.**

Pour compenser cette erreur, l'invention propose de façon avantageuse d'additionner ou de soustraire des harmoniques au signal de sortie **a** du capteur. Les facteurs constants des signaux harmoniques de correction peuvent être obtenus par le biais d'une décomposition de Fourier de l'erreur du signal de sortie du capteur **a.**

En pratique, dans la plupart des applications, une compensation de l'harmonique **4** est suffisante, car les amplitudes des fréquences plus élevées sont très faibles.

L'invention n'est pas limitée aux exemples décrits et représentés car diverses modifications peuvent y être apportées sans sortir de son cadre.

**Revendications**

1. Capteur de position angulaire adapté pour déterminer la position instantanée en rotation d'un objet tournant, du type comportant au moins une première piste électrique **(1)**, au moins une seconde piste électrique **(2)** et au moins une cible magnétique mobile **(3)** en regard de la première piste électrique **(1)** et de la seconde piste électrique **(2)** et solidaire de l'objet tournant, **caractérisé en ce que :**

   - La première piste électrique **(1)** comporte au moins un premier bobinage **(11)** formé de spires sensiblement circulaires centrées par rapport à l'axe de rotation (**O**) de l'objet tournant et de la cible **(3)**,
   - La seconde piste électrique **(2)** comporte :

      i. Au moins un second bobinage **(21)** formé de spires sensiblement circulaires et dont le centre est décalé d'une distance d**1** par rapport au centre (**O**) des spires du premier bobinage de la première piste électrique, et
      ii. Au moins un troisième bobinage **(22)** formé de spires sensiblement circulaires et dont le centre est décalé d'une distance **d1** par rapport au centre (**O**) du premier bobinage de la première piste électrique le long d'un axe **(5)** perpendiculaire à l'axe de rotation de l'objet tournant et de la cible et à un axe **(4)** passant par le centre (**O**) du premier bobinage de la première piste électrique et du second bobinage de la seconde piste électrique.

2. Capteur de position selon la revendication **1, caractérisé en ce que** le premier bobinage **(11)** de la première piste électrique est composé de deux demi-bobinages concentriques (**11a**, **11b**) de diamètres différents et dont le sens de bobinage est inversé.

3. Capteur de position selon la revendication **1** ou **2, caractérisé en ce que** le second bobinage **(21)** de la seconde piste électrique est composé de deux demi-bobinages **(21a, 21b)** de diamètres sensiblement identiques, dont le sens de bobinage est inversé, et décalés chacun d'une distance **d1** dans deux sens opposés par rapport au centre (**O**) des spires du premier bobinage **(11)** de la première piste électrique.

4. Capteur de position selon l'une des revendications **1** à **3, caractérisé en ce que** le troisième bobinage **(22)** de la seconde piste électrique est composé de deux demi-bobinages **(22a, 22b)** de diamètres sensiblement identiques, dont le sens de bobinage est inversé, et décalés chacun d'une distance **d1** dans deux sens opposés par rapport au centre (**O**) du premier bobinage de la première piste électrique le long d'un axe **(5)** perpendiculaire à l'axe de rotation de l'objet tournant et de la cible et à un axe **(4)** passant par le centre du premier bobinage de la première piste électrique et du second bobinage de la seconde piste électrique.

5. Capteur selon l'une des revendications **2** à **4, caractérisé en ce que** le second **(21)** et le troisième **(22)** bobinages de la seconde piste électrique sont formés entre les deux demi-bobinages (**11a**, **11b**) du premier bobinage de la première piste électrique.

6. Capteur selon l'une des revendications **1** à **5, caractérisé en ce que** la cible **(3)** est solidaire de l'objet tournant de telle sorte qu'elle se déplace en rotation dans un plan parallèle au plan dans lequel sont tous trois formés les premier, second et troisième bobinages de la première piste électrique et de la seconde piste électrique.

7. Capteur selon l'une des revendications **1** à **6, caractérisé en ce que** la cible **(3)** couvre la surface comprise entre les deux demi-bobinages (**11a, 11b**) du premier bobinage de la première piste électrique sur un secteur angulaire de 180°.

8. Capteur selon l'une des revendications **1** à **7, caractérisé en ce que** la cible comporte un matériau électriquement conducteur.

9. Capteur selon la revendication **8, caractérisé en ce que** la cible comporte un matériau ferromagnétique.

10. Capteur selon la revendication **8, caractérisé en ce que** la cible comporte un circuit électrique résonnant LC.

11. Capteur selon l'une des revendications **1** à **10, caractérisé en ce que** les spires formant les deuxième et troisième bobinages de la seconde piste électrique ne sont pas parfaitement circulaires, leur rayon étant localement réduit par rapport au rayon d'un cercle parfait dans une zone située au plus proche du centre du premier bobinage de la première piste électrique.

12. Capteur selon l'une des revendications **1** à **11, caractérisé en ce que** les deux demi-bobinages de la première piste électrique sont dimensionnés de manière à ce que la tension induite aux bornes de la piste par un champ magnétique homogène est nulle.

13. Procédé de détermination de la position angulaire d'un objet tournant à l'aide d'un capteur de position angulaire tel que défini à l'une des revendications **1** à **12 caractérisé en ce que** :

- On positionne la cible du capteur sur l'objet tournant de telle sorte qu'elle se déplace lors de mouvement de l'objet en face des bobinages des première et seconde pistes électriques du capteur dans un plan parallèle à celui contenant les dits bobinages,
- On alimente une tension alternative **U1** aux bornes du premier bobinage de la première piste électrique pour générer un champ magnétique **B**,
- On mesure la tension alternative induite **U2, U3** aux bornes des second et troisième bobinages de la seconde piste électrique du capteur, lesdites tensions **U2, U3** étant variables en fonction de la position angulaire de la cible, et
- On calcule la position angulaire $\phi$ de l'objet tournant portant la cible suivant la relation : $\phi=$ atan (U3/U2) Avec

$$U2 = A \sin(\omega t) \cos(\Phi)$$

$$U3 = A \sin(\omega t) \sin(\Phi)$$

Où A= amplitude maximale des tensions **U2, U3**
$\omega$= fréquence du signal d'excitation U**1**
t= temps en seconde

14. Procédé selon la revendication **13, caractérisé en ce que** l'on corrige les éventuelles erreurs sur le calcul de la position angulaire $\phi$ par addition ou soustraction de signaux harmoniques sur la valeur de $\phi$.

**Patentansprüche**

1. Winkelpositionssensor, der dazu vorgesehen ist, die momentane Drehposition eines drehenden Objekts zu bestimmen, umfassend mindestens eine erste elektrische Spur (1), mindestens eine zweite elektrische Spur (2) und mindestens ein bewegliches magnetisches Ziel (3) gegenüber der ersten elektrischen Spur (1) und der zweiten elektrischen Spur (2) und in Verbindung mit dem drehenden Objekt, **dadurch gekennzeichnet, daß**:

- die erste elektrische Spur (1) mindestens eine erste Wicklung (11) umfaßt, die von im wesentlichen kreisförmigen Windungen gebildet ist, die in bezug zur Rotationsachse (0) des drehenden Objekts und des Ziels (3) zentriert sind,
- die zweite elektrische Spur (2) umfaßt:

i. mindestens eine zweite Wicklung (21), die von im wesentlichen kreisförmigen Windungen gebildet ist und deren Zentrum um einen Abstand d1 zum Zentrum (O) der Windungen der ersten Wicklung der ersten elektrischen Spur versetzt ist, und
ii. mindestens eine dritte Wicklung (22), die von im wesentlichen kreisförmigen Windungen gebildet ist und deren Zentrum um einen Abstand d1 in bezug zum Zentrum (O) der ersten Wicklung der ersten elektrischen Spur entlang einer Achse (5) senkrecht auf die Rotationsachse des drehenden Objekts und des Ziels und zu einer Achse (4), die durch das Zentrum (0) der ersten Wicklung der ersten elektrischen Spur und der zweiten Wicklung der zweiten elektrischen Spur verläuft, versetzt ist.

2. Positionssensor nach Anspruch 1, **dadurch gekennzeichnet**, das die erste Wicklung (11) der ersten elektrischen Spur aus zwei konzentrischen Halb-Wicklungen (11a, 11b) mit unterschiedlichen Durchmessern und umgekehrter Wickelrichtung gebildet ist.

3. Positionssensor nach Anspruch 1 oder 2, **dadurch gekennzeichnet, daß** die zweite Wicklung (21) der zweiten elektrischen Spur aus zwei Halb-Wicklungen (21a, 21b) mit im wesentlichen identischen Durchmessern und umgekehrter Wickelrichtung gebildet ist, die um einen Abstand d1 in zwei entgegengesetzte Richtungen in bezug zum Zentrum (O) der Windungen der ersten Wicklung (11) der ersten elektrischen Spur versetzt sind.

4. Positionssensor nach einem der Ansprüche 1 bis 3, **dadurch gekennzeichnet, daß** die dritte Wicklung (22) der zweiten elektrischen Spur aus zwei Halb-Wicklungen (22a, 22b) mit im wesentlichen identischen Durchmessern und umgekehrter Wickelrichtung gebildet ist, die jeweils um einen Abstand d1 in zwei entgegengesetzte Richtungen in bezug zum Zentrum (O) der ersten Wicklung der ersten elektrischen Spur entlang einer Achse (5) senkrecht auf die Rotationsachse des drehenden Objekts und des Ziels und auf eine Achse (4), die durch das Zentrum der ersten Wicklung der ersten elektrischen Spur und der zweiten Wicklung der zweiten elektrischen Spur verläuft, versetzt sind.

**5.** Sensor nach einem der Ansprüche 2 bis 4, **dadurch gekennzeichnet, daß** die zweite (21) und die dritte (22) Wicklung der zweiten elektrischen Spur zwischen den beiden Halb-Wicklungen (11a, 11b) der ersten Wicklung der ersten elektrischen Spur gebildet sind.

**6.** Sensor nach einem der Ansprüche 1 bis 5, **dadurch gekennzeichnet, daß** das Ziel (3) mit dem drehenden Objekt verbunden ist, so daß es sich in Rotation in einer Ebene parallel zu der Ebene, in der alle drei, die erste, zweite und dritte Wicklung der ersten elektrischen Spur und der zweiten elektrischen Spur gebildet sind, bewegt.

**7.** Sensor nach einem der Ansprüche 1 bis 6, **dadurch gekennzeichnet, daß** das Ziel (3) die Fläche zwischen den beiden Halbwicklungen (11a, 11b) der ersten Wicklung der ersten elektrischen Spur auf einem Winkelsektor von 180° abdeckt.

**8.** Sensor nach einem der Ansprüche 1 bis 7, **dadurch gekennzeichnet, daß** das Ziel ein elektrisch leitendes Material umfaßt.

**9.** Sensor nach Anspruch 8, **dadurch gekennzeichnet, daß** das Ziel ein ferromagnetisches Material umfaßt.

**10.** Sensor nach Anspruch 8, **dadurch gekennzeichnet, daß** das Ziel eine elektrische Resonanzschaltung LC umfaßt.

**11.** Sensor nach einem der Ansprüche 1 bis 10, **dadurch gekennzeichnet, daß** die Windungen, die die zweiten und dritten Wicklungen der zweiten elektrischen Spur bilden, nicht perfekt kreisförmig sind, wobei ihr Radius lokal in bezug zum Radiums eines perfekten Kreises in einer Zone verringert ist, die sich am nächsten zum Zentrum der ersten Wicklung der ersten elektrischen Spur befindet.

**12.** Sensor nach einem der Ansprüche 1 bis 11, **dadurch gekennzeichnet, daß** die beiden Halbwicklungen der ersten elektrischen Spur derart dimensioniert sind, daß die an den Klemmen der Spur durch ein homogenes Magnetfeld induzierte Spannung gleich Null ist.

**13.** Verfahren zum Bestimmen der Winkelposition eines drehenden Objekts mit Hilfe eines Winkelpositionssensors, wie in einem der Ansprüche 1 bis 12 definiert, **dadurch gekennzeichnet, daß**:

- das Ziel des Sensors auf dem drehenden Objekt derart positioniert wird, daß es sich bei der Bewegung des Objekts gegenüber den Wicklungen der ersten und der zweiten elektrischen Spur des Sensors in einer Ebene parallel zu der die Wicklungen enthaltenden bewegt,
- eine Wechselspannung U1 an den Klemmen der ersten Wicklung der ersten elektrischen Spur zugeführt wird, um ein Magnetfeld B zu erzeugen,
- die induzierte Wechselspannung U2, U3 an den Klemmen der zweiten und der dritten Wicklung der zweiten elektrischen Spur des Sensors gemessen wird, wobei die Spannungen U2, U3 in Abhängigkeit von der Winkelposition des Ziels variabel sind, und
- die Winkelposition φ des drehenden Objekts, das das Ziel trägt, nach folgendem Verhältnis berechnet wird: φ = atan (U3/U2)
wobei

$$U2 = A \sin(\omega t) \cos(\varphi)$$

$$U3 = A \sin(\omega t) \sin(\varphi)$$

wobei A = Maximalamplitude der Spannungen U2, U3
ω = Frequenz des Erregungssignals U1
t = Zeit in Sekunden

**14.** Verfahren nach Anspruch 13, **dadurch gekennzeichnet, daß** die möglichen Fehler bei der Berechnung der Winkelposition φ durch Addition oder Subtraktion von harmonischen Signalen am Wert von φ korrigiert werden.

**Claims**

**1.** An angular position sensor adapted to determine the instantaneous position in rotation of a rotary article, the sensor being the type comprising at least one first electric track (1), at least one second electric track (2), and at least one movable magnetic target (3) facing the first electric track (1) and the second electric track (2) and secured to the rotary article, the sensor being **characterized in that**:

· the first electric track (1) includes at least one first winding (11) formed by substantially circular turns centered relative to the axis of rotation (O) of the rotary article and of the target (3) ; and
· the second electric track (2) comprises:

i. at least one second winding (21) made up of substantially circular turns of center offset by a distance d1 from the center (O) of the turns of the first winding of the first electric track; and

ii. at least one third winding (22) made up of substantially circular turns of center offset by a distance d1 from the center (O) of the first winding of the first electric track along an axis (5) perpendicular to the axis of rotation of the rotary article and of the target and to an axis (4) passing through the center (O) of the first winding of the first electric track and of the second winding of the second electric track.

2. A position sensor according to claim 1, **characterized in that** the first winding (11) of the first electric track is made up of two concentric half-windings (11a, 11b) of different diameters and wound in opposite directions.

3. A position sensor according to claim 1 or claim 2, **characterized in that** the second winding (21) of the second electric track is made up of two half-windings (21a, 21b) of substantially identical diameters and wound in opposite directions, and each offset by a distance d1 in two opposite directions from the center (O) of the turns of the first winding (11) of the first electric track.

4. A position sensor according to any one of claims 1 to 3, **characterized in that** the third winding (22) of the second electric track is made up of two half-windings (22a, 22b) of substantially identical diameters, wound in opposite directions, and each offset by a distance d1 in two opposite directions relative to the center (O) of the first winding of the first electric track along an axis (5) perpendicular to the axis of rotation of the rotary article and of the target, and to an axis (4) passing through the center of the first winding of the first electric track and of the second winding of the second electric track.

5. A sensor according to any one of claims 2 to 4, **characterized in that** the second and third windings (21, 22) of the second electric track are formed between the two half-windings (11a, 11b) of the first winding of the first electric track.

6. A sensor according to any one of claims 1 to 5, **characterized in that** the target (3) is secured to the rotary article in such a manner as to move in rotation in a plane parallel to the plane in which all three of the first, second, and third windings of the first and second electric tracks are formed.

7. A sensor according to any one of claims 1 to 6, **characterized in that** the target (3) covers the surface extending between the two half-windings (11a, 11b) of the first winding of the first electric track over an angular sector of 180°.

8. A sensor according to any one of claims I to 7, **characterized in that** the target comprises an electrically conductive material.

9. A sensor according to claim 8, **characterized in that** the target comprises a ferromagnetic material.

10. A sensor according to claim 8, **characterized in that** the target comprises an LC resonant electric circuit.

11. A sensor according to any one of claims 1 to 10, **characterized in that** the turns forming the second and third windings of the second electric track are not perfectly circular, their radiuses is being locally reduced relative to the radius of a perfect circle in a zone situated closest to the center of the first winding of the first electric track.

12. A sensor according to any one of claims 1 to 11, **characterized in that** the two half-windings of the first electric track are dimensioned in such a manner that the voltage induced across the terminals of the track by a uniform magnetic field is zero.

13. A method of determining the angular position of a rotary article with the help of an angular position sensor as defined in anyone of claims 1 to 12, the method being **characterized by** the following steps:

· positioning the target of the sensor on the rotary article in such a manner that it moves during the movement of the article so as to face the windings of the first and second electric tracks of the sensor in a plane parallel to the plane containing said windings;

· supplying an alternating voltage U1 to the terminals of the first winding of the first electric track in order to generate a magnetic field B;

· measuring the alternating voltage U2, U3 induced at the terminals of the second and third windings of the second electric track of the sensor, said voltages U2, U3 varying as a function of the angular position of the target; and

· calculating the angular position $\phi$ of the rotary article carrying the target using the following relationship:

$$\Phi = atan(U3/U2)$$

with:

$$U2 = Asin(\omega t)cos(\Phi)$$

$$U3 = Asin(\omega t)sin(\Phi)$$

A = the maximum amplitude of the voltages U2, U3

$\omega$ = the frequency of the excitation signal U1

t = time in seconds.

**14.** A method according to claim 13, **characterized in that** any errors in the calculation of the angular position $\phi$ are connected by adding or subtracting harmonic signals to or from the value of $\phi$.

FIG.1

FIG.2

FIG.3

FIG.4

FIG.5A

FIG.5B

**EP 2 446 228 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19738836 A1